# EUROPEAN PATENT SPECIFICATION

(11) **EP 2 537 099 B1**
(45) Date of publication and mention of the grant of the patent: **06.01.2016**
(21) Application number: 10845760.7
(22) Date of filing: 15.02.2010
(51) Int. Cl.: H04L 12/28, H04L 29/08

(54) **NETWORK NODE FOR DETECTING A COMMUNICATION DEVICE**
NETZWERKKNOTEN ZUR ERKENNUNG EINER KOMMUNIKATIONSVORRICHTUNG
NOEUD DE RÉSEAU DESTINÉ À DÉTECTER UN DISPOSITIF DE COMMUNICATION

(43) Date of publication of application: 26.12.2012
(73) Proprietor: Telefonaktiebolaget L M Ericsson (PUBL), 164 83 Stockholm (SE)
(72) Inventor: YASUKAWA, Kenta, Kanagawa 213-0015 (JP); SUGIMOTO, Shinta, Kawasaki-shi Kanagawa 211-0012 (JP); GERDES, Martin, 52156 Monschau-Rohren (DE)
(74) Representative: Ericsson
(86) International application number: PCT/JP2010/052570
(87) International publication number: WO 2011/099168

(56) References cited:
- EP-A2- 1 589 691
- EP-A2- 2 000 915
- US-A1- 2007 192 462
- US-A1- 2008 235 358

## Description

### TECHNICAL FIELD

The present invention generally relates to a network node for detecting a communication device in a local network and identifying the type of the detected communication device, and a control method therefor.

### BACKGROUND

Currently, communication devices are known that are capable of communicating with each other thereby forming a local network. An example of such a communication device is a personal computer (PC) that is equipped with a network interface card and a mobile phone that is equipped with an IEEE 802.11a/b/g-compliant communication module. Configurations are also known whereby the local network is connected to a wide area network (WAN) via a gateway. In this case, the communication devices in the local network can communicate with external servers via the WAN and receive various services therefrom. An example of such a service is a video streaming service; a communication device such as a PC and a mobile phone receives video data from a video server, and renders the video data on a display.

These days, the number of service providers that provide local networks with their services is increasing. As a result, the burden for a user of communication devices in a local network to choose their desired services is also increasing. One solution to reduce the burden of a user is to make service providers propose, to a local network, only services that fit with the local network. For example, if a local network does not include a digital audio player, service providers should not propose audio services to that local network.

In order to implement such a solution effectively, it is necessary for service providers to know the capabilities of communication devices in a local network. Service providers can know the capabilities of communication devices that are configured to announce their existence and capabilities to the other communication devices and service providers. An example of such a communication device that announces its existence and capabilities is DLNA® Digital Media Server (DMS). However, all communication devices in a local network do not necessarily announce their existence and capabilities explicitly. An example of a communication device (hereinafter referred to as "stealth device") that does not announce its existence and capabilities is a DLNA® Digital Media Player (DMP). The DLNA® DMP searches for and controls a DLNA® Digital Media Server (DMS) to obtain and playback media, but is not designed to be controlled by other communication devices. Other than DLNA® DMPs, communication devices that are not controlled by other communication devices are likely designed not to announce their existence and capabilities, because their existence and capabilities are not essential to the other communication devices under conventional usage.

US 2008/0235358 A1 and US 6094681 A discloses techniques for detecting the existence of stealth devices by capturing messages sent out by the stealth devices. However, although the techniques disclosed in these patent documents enable the detection of stealth devices, the techniques do not enable the identification of the type of the detected stealth devices. EP 2 000 915 A2 shows "device discovery process" in Fig. 7 and discloses that the user who executes selection of an AS (IP-TV) discovers that the home IMS gateway is connected on the home network by the process according to the device discovery protocol defined in UPnP from UPnP Control Point, for example, a PC or the like having a browser function, i.e., by sending SSDP M-Search in step S19 and receiving SSDP M-Response as a response thereto in step S20 ,and further discloses steps S21 and S22 of requesting and receiving specific device information. US 2007/192462 A1 disclose (1) in step 300 MHD (mobile hand-held devise) 200 transmits a UPnP M-search request message to the HND (home network device), (2)in step 305 the HND 220 supporting the DLNA transmits a UPnP M-search response message to the MHD 200, (3)in step 310 the MHD 200 can confirm the HND 220 supports the DLNA and transmits a get device description message to the confirmed HND 220, (4)in step 315 the HND 220 transmits a device description message to the MHD 200, and (5)in step 320 the MHD 200 transmits a corresponding request bundle information message to a corresponding HND 220. The request in S21 of EP 2 000 915 A2 and the request in step 320 of US 2007/0192462 A1 may include identification information which corresponds to a type of the communication device such as DMP and MHD. However, EP 2 000 915 A2 and US 2007/0192462 A1 cannot identify the type of the detected communication device if there are two or more types which are associated with the identification information.

### SUMMARY

The present invention is intended to address the above-described problem, and it is a feature thereof to introduce a technology that can identify the type of the detected communication devices even if there are two or more types which are associated with the identification information.

According to the first aspect of the present invention, there is provided a network node for detecting a communication device in a local network and identifying a type of the detected communication device, comprising:
a detecting unit that detects a search message sent out by a communication device in the local network, the search message including an indicator of a target node to be searched for;
a generating unit that generates a response message upon detection of the search message, the response message including a network address at which the communication device can access the network node and an indicator of the target node;
a sending unit that sends the response message to the communication device as a response to the search message;
a receiving unit that receives a request message addressed to the network address from the communication device, the request message including identification information which corresponds to a type of the communication device;
an extracting unit that extracts the identification information from the request message; and
a reporting unit that reports the identification information to an identifying unit that identifies the type of the communication device based on the identification information, characterized by that :
   the request message further includes unique information which distinguishes the communication device from another communication device;
   the extracting unit extracts, from the request message, the unique information in addition to the identification information;
   the reporting unit reports, to the identifying unit, the unique information in association with the identifying information; and
   the identifying unit is configured to identify the type of the communication device by searching a database (209) for a type which is associated with the identification information, and the identifying unit is further configured to, if two or more types which are associated with the identification information is found by the searching, identify the type of the communication device by searching the database for a type which is associated with both the identification information and another identification information reported by the reporting unit in association with the unique information.

According to the second aspect of the present invention, the network node further comprises a determining unit that determines a protocol of the search message by analyzing content of the search message, wherein the generating unit generates a response message complying with the determined protocol as the response message to be sent by the sending unit.

The main advantage of the present invention is that it is possible to detect a communication device in a local network and identify the type of the detected communication device even if the communication device is a stealth device. The other advantage of the present invention is that the present invention can identify the type of the detected communication devices even if there are two or more types which are associated with the identification information.

Further features of the present invention will become apparent from the following description of exemplary embodiments with reference to the attached drawings, in which like reference characters designate the same or similar parts throughout the figures thereof.

### BRIEF DESCRIPTION OF DRAWINGS

Fig. 1 is an overview of a local network 100 according to an exemplary embodiment of the present invention;
Fig. 2 is a functional block diagram of a network node 200 according to the exemplary embodiment of the present invention; and
Fig. 3 is a flowchart illustrating a procedure whereby the network node 200 detects a stealth device and identifies a type of the detected stealth device according to the exemplary embodiment of the present invention.

### DETAILED DESCRIPTION

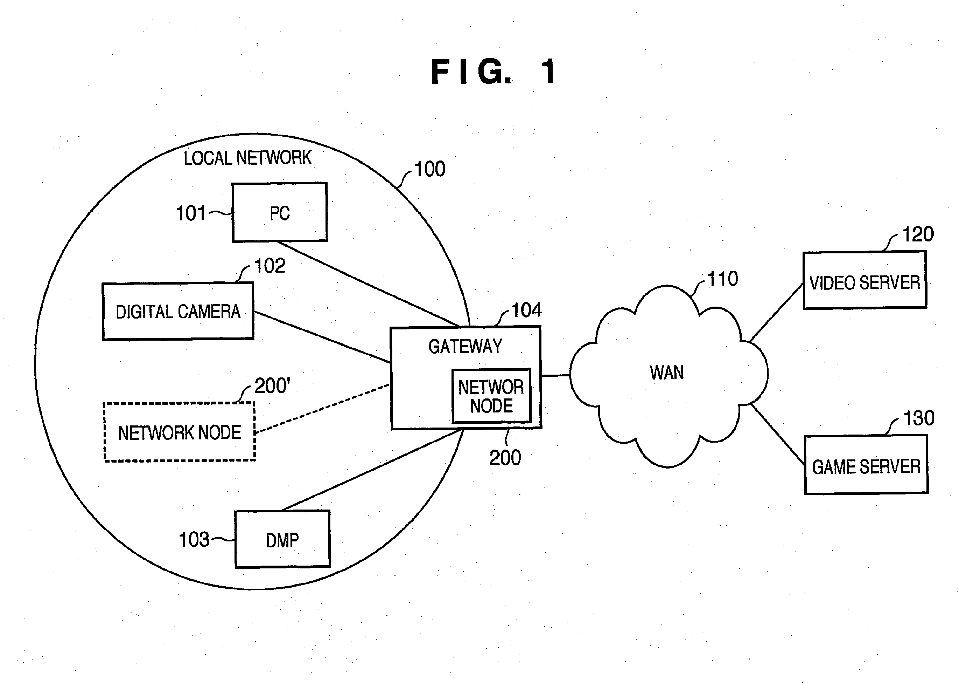

Fig. 1 is an overview of a local network 100 according to an exemplary embodiment of the present invention. The local network 100 is, for example, a local area network (LAN), a personal area network (PAN), or the like. As shown in Fig. 1, the local network 100 includes several communication devices such as a personal computer (PC) 101, digital camera 102, and a digital media player (DMP) 103. The local network 100 also includes a gateway 104, and the local network 100 is connected to a wide area network (WAN) 110 such as the Internet via the gateway 104. Accordingly, the communication devices in the local network 100 can receive various services via the gateway 104 from external servers such as a video server 120 and a game server 130 that are connected to the WAN 110.

Some of the communication devices in the local area network 100 are "stealth devices" that do not announce their existence and capabilities to the other communication devices and the external servers. In the present embodiment, it is assumed that the DMP 103 is a stealth device. In order to enable the detection of the stealth device (e.g., the DMP 103) in the local network 100 and identification of the type of the detected stealth device, the present embodiment provides a network node 200.

Typically, the network node 200 is implemented in the gateway 104 as illustrated in Fig. 1. However, the implementation is not limited to the illustration of Fig. 1; for example, the network node 200 may be implemented in a dedicated communication device that is included in the local network 100 (see the dashed box 200').

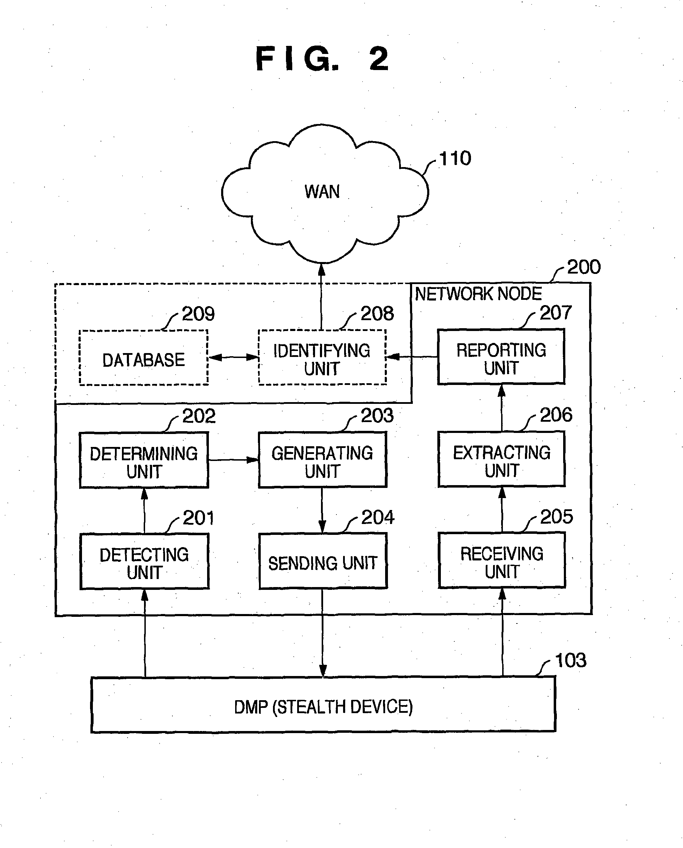

Fig. 2 is a functional block diagram of the network node 200 according to the exemplary embodiment of the present invention. It should be noted that the functionality of each block in the network node 200 may be implemented using dedicated hardware, using software executed by a processor (not shown), or a combination thereof.

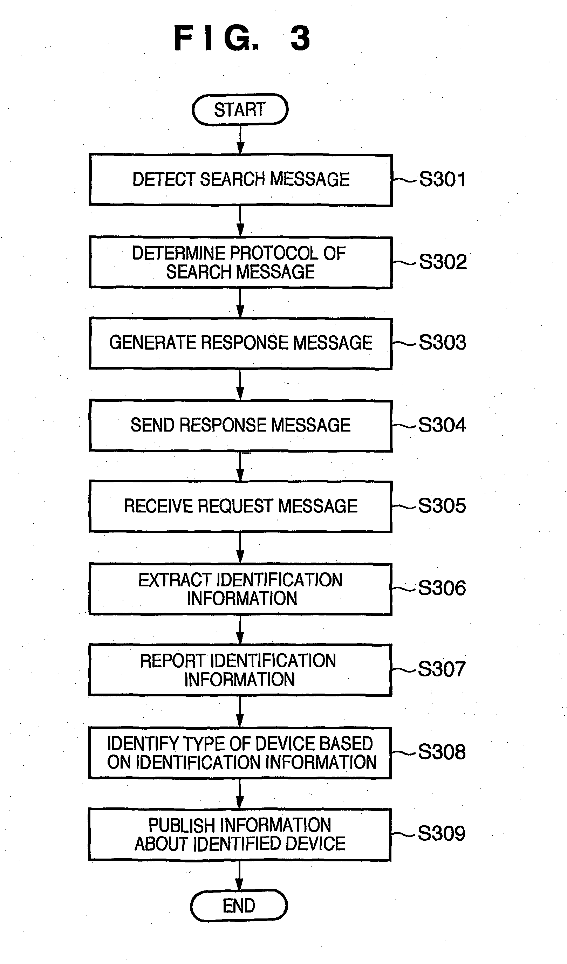

The network node 200 comprises a detecting unit 201, a determining unit 202, a generating unit 203, a sending unit 204, a receiving unit 205, an extracting unit 206, and a reporting unit 207. The network node 200 may also comprise an identifying unit 208 and a database 209. However, the identifying unit 208 and the database 209 may be located outside the network node 200; for example, they may be located in a server (not shown) that is connected to the WAN 110. The operations of respective units will be described later with reference to the flowchart shown in Fig. 3.

Fig. 3 is a flowchart illustrating a procedure whereby the network node 200 detects a stealth device and identifies a type of the detected stealth device. In Fig. 3, the DMP 103 is shown as an example of a stealth device. The DMP 103 is configured to send out a search message such as an SSDP Discovery message to the local network 100 when, for example, the DMP 103 joins the local network 100. Although the process of Fig. 3 slightly varies depending on the protocol of the search message, the generic process is described first, and protocol-specific processes are described later taking Bonjour® and UPnP™ as an example.

In step S301, the detecting unit 201 detects a search message sent out by a stealth device (e.g., the DMP 103). The search message includes an indicator of a target node to be searched for. At this moment, the detecting unit 201 does not know the protocol of the search message. The detecting unit 201 passes the detected search message to the determining unit 202.

In step S302, the determining unit 202 determines a protocol of the detected search message. For example, the determining unit 202 maintains the following table. Although Bonjour® and UPnP™ are shown as an example, it is possible to design the network node 200 to support more protocols by making the table contain more entries.

| Dest. IP address | Dest. port number | Protocol |
|---|---|---|
| 224.0.0.251 | 5353 | Bonjour |
| 239.255.255.250 | 1900 | UPnP |

The determining unit 202 searches the table for the entry that matches the destination IP address and the destination port number of the search message. For example, if the destination IP address is 239.255.255.250 and the destination port number is 1900, the determining unit 202 determines that the protocol of the search message is UPnP™. The determining unit 202 passes the search message to the generating unit 203 together with the indicator of the determined protocol.

In some embodiments, the network node 200 may be designed for a single specific protocol (e.g., UPnP™). In this case, the determining unit 202 may be omitted, and the detecting unit 201 detects an SSDP Discovery message and passes the detected message to the generating unit 203.

In step S303, the generating unit 203 generates a response message to respond to the search message that was detected in step S301. The response message includes a network address (e.g., the combination of an IP address and a port number) at which the stealth device can access the network node 200. Moreover, by investigating the search message, the generating unit 203 identifies the target node that is searched for by the stealth device. The generating unit 203 then includes an indicator of the same target node in the response message such that the network node 200 operates as if it were the target node.

In step S304, the sending unit 204 sends the response message to the stealth device as a response to the search message. Since the response message includes the indicator of the target node, when the stealth device receives the response message, the stealth device recognizes that the network node 200, which functions as the target node, is found. Therefore, the stealth device generates a request message and sends it to the network address included in the response message. The request message includes identification information that corresponds to a type of the stealth device. An example of the identification information is a User-Agent header. For example, if the stealth device is a PlayStation® 3, the User-Agent header is "Mozilla/5.0 (PLAYSTATION 3; 2.00)". The request message (to be exact, the Layer 2 header of the packets that carries the request message) may also include a MAC address of the stealth device; the MAC address is unique information that distinguishes the stealth device, which has sent out the request message, from another communication device. It should be noted that the search message detected in step S301 includes the same MAC address. To be more general, all messages originating from the same stealth device include the same source MAC address. Accordingly, the network node 200 can determine whether or not respective messages originate from the same stealth device by comparing the source MAC addresses of the messages with each other.

In step S305, the receiving unit 205 receives the request message addressed to the network address of the network node 200 from the stealth device. The receiving unit 205 passes the request message to the extracting unit 206.

In step S306, the extracting unit 206 extracts the identification information (e.g., a User-Agent header) from the request message. The extracting unit 206 may also extract the MAC address from the request message.

In step S307, the reporting unit 207 reports the identification information to the identifying unit 208. The reporting unit 207 may also report the MAC address to the identifying unit 208 in association with the identification information.

In step S308, the identifying unit 208 searches the database 209 for a type that is associated with the identification information. For example, the database 209 includes the following table.

| Identification Information | Type of Device (Device Name) |
|---|---|
| User-Agent = "Mozilla/5.0 (PLAYSTATION 3; 2.00)" | PlayStation® 3 |
| User-Agent = "XXX" | DMP AAA |
| User-Agent = "XXX" | DMP BBB |
| ID = "ZZZ" | DMP BBB |
| ID = "ZZZ" | DMP CCC |

If a User-Agent header is "Mozilla/5.0 (PLAYSTATION 3; 2.00)", "PlayStation 3" is found in the table. In this case, the identifying unit 208 determines that the type of the stealth device is PlayStation® 3.

In step S309, the identifying unit 208 publishes information about the identified stealth device to the WAN 110. For example, if the stealth device is a PlayStation® 3, the identifying unit 208 publishes, to the WAN 110, information indicating that a PlayStation® 3 is included in the local network 100. Accordingly, it is possible for the external servers (e.g., the video server 120 and the game server 130) to propose, to the local network 100, services that fit with a PlayStation® 3.

In some embodiments, the identifying unit 208 may retrieve the capabilities of the identified stealth device (e.g., a PlayStation® 3) from the database 209, and publish the retrieved capabilities to the WAN 110. In this case, it is not necessary for the external servers to have knowledge about the capabilities of various types of communication devices in advance, because the capabilities are published when the type of the communication device is identified.

As shown in the above table, some identification information items (e.g., User-Agent = "XXX") may be associated with two or more types of communication devices. In this case, those two or more types of communication devices are candidates for the type of the stealth device. Accordingly, the identifying unit 208 chooses one of the candidates in accordance with the following procedure.

The identifying unit 208 stores the candidates (e.g., "DMP AAA" and "DMP BBB") in a memory (not shown) in association with the MAC address which has been reported in step S307 in association with the identification information. The identifying unit 208 then waits for another (the second) identification information associated with the same MAC address. When the stealth device, which previously sent the request message including the User-Agent header "XXX" to the network node 200, sends another request message including the second identification information, the second identification information is reported to the identifying unit 208 in association with the same MAC address in the same way as described with reference to steps S305-S307. It is assumed that the second identification information is ID = "ZZZ", although the type of the second identification information varies depending on the type of the request message. The identifying unit 208 then searches the database 209 for a type which is associated with the second identification information ID = "ZZZ". In this example, "DMP BBB" and "DMP CCC" are found. Since "DMP BBB" was previously stored in the memory in association with the MAC address, the identifying unit 208 determines that not "DMP CCC" but "DMP BBB" is the type of the stealth device. In other words, the identifying unit 208 searches the database 209 for a type that is associated with both the first identification information reported in association with a MAC address and the second identification information reported in association with the same MAC address. In this example, one (i.e., "DMP BBB") of the candidates is identified by use of the first and second identification information. However, in the case that two or more candidates still remain, the same process is repeated for the subsequent (i.e., the third, force, fifth, and so on) identification information until one of the candidates is identified.

Hereinafter, processes unique to specific protocols are described.

If the stealth device is equipped with a UPnP™ control point and sends out an SSDP Discovery message to the local network 100, the search message detected by the detecting unit 201 in step S301 is, for example, as follows.

| |
|---|
| M-SEARCH * HTTP/1.1 |
| S: uuid:ijklmnop-7dec-11d0-a765-00a0c91e6bf6 |
| Host: 239.255.255.250:1900 |
| Man: "ssdp:discover" |
| ST: ge:fridge |
| MX: 3 |

In step S302, the determining unit 202 checks the Layer 3 header of the packets that carries the search message, and found that the destination IP address is 239.255.255.250 and the destination port number is 1900. Accordingly, the determining unit 202 determines that the protocol of the search message is UPnP™.

In step S303, because the protocol of the search message is UPnP™, the generating unit 203 looks for the search target (ST) in the search message. In the above example, "ge:fridge" is found, and the generating unit 203 determines that an indicator of the target node to be searched is "ge:fridge". Accordingly, the generating unit 203 generates a response message as follows.

| |
|---|
| HTTP/1.1 200 OK |
| S: uuid:ijklmnop-7dec-11d0-a765-00a0c91e6bf6 |
| Ext: |
| Cache-Control: no-cache="Ext", max-age = 5000 |
| ST: ge:fridge |
| USN: uuid:abcdefgh-7dec-11d0-a765-00a0c91e6bf6 |
| Location: http://192.168.1.100:40000 |

This response message allows the network node 200 to mimic a UPnP™ device named "ge:fridge" as shown in the ST header. The network node 200 listens to a request message at the network address of "192.168.1.100:40000" (the IP address is 192.168.1.100 and the port number is 40000) as shown in the Location header.

Upon reception of the response message, the stealth device sends an HTTP GET request addressed to "192.168.1.100:40000". The HTTP GET request includes a User-Agent header, and the Layer 2 header of the packets which carries the HTTP GET request includes the MAC address of the stealth device. Accordingly, in step S206, the extracting unit 206 can extract the User-Agent header as identification information of the stealth device, and also extract the MAC address as the unique information of the stealth device. Upon reception of the HTTP GET request, the network node 200 may send an SSDP BYE message to the stealth device so as to remove the network node 200 from the list of discovered devices maintained by the stealth device.

Next, the case of Bonjour® is described. If the stealth device is compliant with Bonjour®, it searches for a desired service by means of a multicast DNS query message. Accordingly, the search message detected by the detecting unit 201 in step S301 is, for example, as follows. It should be noted that, although the message below is described in a text format for the purpose of explanation, the actual multicast DNS query message is in binary format.

| |
|---|
| IP Src 10.0.1.2 Dst 224.0.0.251 UDP Src 5353 Port 5353 |
| Queries: |
| _appletv._tcp.local: type PTR, class IN, "QU" question |
| _daap._tcp.local: type PTR, class IN, "QU" question |
| _touch-remote._tcp.local: type PTR, class IN, "QU" question |
| _raop._tcp.local: type PTR, class IN, "QU" question |

In this example, Apple TV® is the target node to be searched for. Accordingly, the generating unit 203 generates the following response message (mDMS message) in order to mimic Apple TV®.

| |
|---|
| IP Src 10.0.1.1 Dst 224.0.0.251 UDP Src 5353 Port 5353 Answers: |
| appletv_raop._tcp.local: type PTR, class IN, 0017F2E27645@dummy.raop.tcp.local Additional Records: |
| dummy.local: type A, class IN, cache flush, addr 10.0.1.1 |
| dummy.local: type AAAA, class IN, cache flush, addr fe80::217:f2ff:fee2:7645 |
| 0017F2E27645@dummy.raop.tcp.local: type SRV, class IN, cache flush, priority 0, weight 0, port 5000, target dummy.local |
| 0017F2E27645@dummy.raop.tcp.local: type TXT, class IN, |
| cache flush |

As similar to the case of UPnP™, upon reception of the response message, the stealth device sends a request message addressed to 10.0.1.1:5000. An example of the request message is as follows.

| |
|---|
| OPTIONS * RTSP/1.0 |
| CSeq: 1 |
| User-Agent: iTunes/9.0.3 (Windows; Microsoft Windows |
| Vista Enterprise Edition Service Pack 1 (Build 6001)) |
| AppleWebKit/531.21.8 |
| Client-Instance: C8C3E3DD20D83FCB |
| DACP-ID: C8C3E3DD20D83FCB |
| Active-Remote: 797657571 |
| Apple-Challenge: ovqAkP/UBi58koCpj4J8hA |

The receiving unit 205 receives the request message described above. Accordingly, the extracting unit 206 can extract the User-Agent header as identification information of the stealth device, and also extract the MAC address as the unique information of the stealth device. Similar to the case of UPnP®, the network node 200 may send a "goodbye" message to the stealth device. Details of the process of sending the "goodbye" message are found, for example, at http://files.multicastdns.or.g/draft-cheshire-dnsext-multicastdns.txt (in Section 11.2, it is noted that "a message with TTL=0" should be sent to indicate the recode is no longer valid).

As described above, according to the embodiments of the present invention, the network node 200 detects a search message sent out by a stealth device, and sends a response message to the stealth device as if the network node 200 were a target node to be searched for. The network node 200 then receives a request message from the stealth device, and extracts, from the request message, identification information (e.g., a User-Agent header) that corresponds to a type of the stealth device. The identifying unit 208, which may be located inside or outside the network node 200, identifies the type of the stealth device based on the extracted identification information.

Accordingly, it is possible to detect a communication device in a local network and identify the type of the detected communication device even if the communication device is a stealth device.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A network node (200) for detecting a communication device (103) in a local network (100) and identifying a type of the detected communication device, comprising:
a detecting unit (201) that detects a search message sent out by a communication device in the local network, the search message including an indicator of a target node to be searched for;
a generating unit (203) that generates a response message upon detection of the search message, the response message including a network address at which the communication device can access the network node and an indicator of the target node;
a sending unit (204) that sends the response message to the communication device as a response to the search message;
a receiving unit (205) that receives a request message addressed to the network address from the communication device, the request message including identification information which corresponds to a type of the communication device;
an extracting unit (206) that extracts the identification information from the request message; and
a reporting unit (207) that reports the identification information to an identifying unit (208) that identifies the type of the communication device based on the identification information, **characterized by** that :
the request message further includes unique information which distinguishes the communication device from another communication device;
the extracting unit extracts, from the request message, the_ unique information in addition to the identification information;
the reporting unit reports, to the identifying unit, the unique information in association with the identifying information; and
the identifying unit is configured to identify the type of the communication device by searching a database (209) for a type which is associated with the identification information, and the identifying unit is further configured to, if two or more types which are associated with the identification information is found by the searching, identify the type of the communication device by searching the database for a type which is associated with both the identification information and another identification information reported by the reporting unit in association with the unique information.

2. The network node according to claims 1, further comprising a determining unit (202) that determines a protocol of the search message by analyzing content of the search message,
wherein the generating unit generates a response message complying with the determined protocol as the response message to be sent by the sending unit.

## Patentansprüche

1. Netzknoten (200) zum Erkennen einer Kommunikationsvorrichtung (103) in einem lokalen Netz (100) und zum Identifizieren eines Typs der erkannten Kommunikationsvorrichtung, umfassend:
eine Erkennungseinheit (201), die eine Suchnachricht erkennt, die durch eine Kommunikationsvorrichtung in dem lokalen Netz ausgesendet wird, wobei die Suchnachricht einen Indikator eines Zielknotens aufweist, nach dem gesucht wird;
eine Erzeugungseinheit (203), die bei Erkennung der Suchnachricht eine Antwortnachricht erzeugt, wobei die Antwortnachricht eine Netzadresse, unter der die Kommunikationsvorrichtung auf den Netzknoten zugreifen kann, und einen Indikator des Zielknotens aufweist;
eine Sendeeinheit (204), die als Antwort auf die Suchnachricht die Antwortnachricht an die Kommunikationsvorrichtung sendet;
eine Empfangseinheit (205), die eine an die Netzadresse adressierte Anforderungsnachricht von der Kommunikationsvorrichtung empfängt, wobei die Anforderungsnachricht Identifikationsinformation aufweist, die einem Typ der Kommunikationsvorrichtung entspricht;
eine Extraktionseinheit (206), die die Identifikationsinformation aus der Anforderungsnachricht extrahiert; und
eine Meldeeinheit (207), die die Identifikationsinformation an eine Identifizierungseinheit (208) meldet, die den Typ der Kommunikationsvorrichtung auf der Grundlage der Identifikationsinformation identifiziert, **dadurch gekennzeichnet, dass**:
die Anforderungsnachricht ferner eindeutige Information aufweist, die die Kommunikationsvorrichtung von einer anderen Kommunikationsvorrichtung unterscheidet;
die Extraktionseinheit die eindeutige Information zusätzlich zu der Identifikationsinformation aus der Anforderungsachricht extrahiert;
die Meldeeinheit die eindeutige Information unter Zuordnung zu der Identifizierungsinformation an die Identifizierungseinheit meldet; und
die Identifizierungseinheit dafür konfiguriert ist, den Typ der Kommunikationsvorrichtung zu identifizieren, indem eine Datenbank (209) nach einem Typ, der der Identifikationsinformation zugeordnet ist, durchsucht wird, und die Identifizierungseinheit ferner dafür konfiguriert ist, den Typ der Kommunikationsvorrichtung, wenn zwei oder mehr Typen, die der Identifikationsinformation zugeordnet sind, vorgefunden werden, zu identifizieren, indem die Datenbank nach einem Typ durchsucht wird, der sowohl der Identifikationsinformation als auch einer anderen Identifikationsinformation, die die Meldeeinheit unter Zuordnung zu der eindeutigen Information meldet, zugeordnet ist.

2. Netzknoten nach Anspruch 1, ferner umfassend eine Bestimmungseinheit (202), die ein Protokoll der Suchnachricht durch Analysieren des Inhalts der Suchnachricht bestimmt,
wobei die Erzeugungseinheit eine Antwortnachricht erzeugt, die dem bestimmten Protokoll als die Antwortnachricht, die durch die Sendeeinheit zu senden ist, entspricht.

## Revendications

1. Noeud de réseau (200) destiné à détecter un dispositif de communication (103) dans un réseau local (100) et à identifier un type du dispositif de communication détecté, comprenant :
une unité de détection (201) qui détecte un message de recherche envoyé par un dispositif de communication dans le réseau local, le message de recherche incluant un indicateur d'un noeud cible à rechercher ;
une unité de génération (203) qui génère un message de réponse suite à la détection du message de recherche, le message de réponse incluant une adresse de réseau à laquelle le dispositif de communication peut accéder au noeud de réseau, et un indicateur du noeud cible ;
une unité d'envoi (204) qui envoie le message de réponse au dispositif de communication en réponse au message de recherche ;
une unité de réception (205) qui reçoit un message de demande, adressé à l'adresse de réseau, en provenance du dispositif de communication, le message de demande incluant des informations d'identification qui correspondent à un type du dispositif de communication ;
une unité d'extraction (206) qui extrait les informations d'identification du message de demande ; et
une unité de rapport (207) qui signale les informations d'identification à une unité d'identification (208) qui identifie le type du dispositif de communication sur la base des informations d'identification, **caractérisé en ce que** :
le message de demande inclut en outre des informations uniques qui distinguent le dispositif de communication d'un autre dispositif de communication ;
l'unité d'extraction extrait, du message de demande, les informations uniques, outre les informations d'identification ;
l'unité de rapport signale, à l'unité d'identification, les informations uniques, conjointement avec les informations d'identification ; et
l'unité d'identification est configurée de manière à identifier le type du dispositif de communication en recherchant, dans une base de données (209), un type de dispositif de communication qui est associé aux informations d'identification, et l'unité d'identification est en outre configurée de manière à, si deux types de dispositif de communication ou plus qui sont associés aux informations d'identification sont trouvés dans le cadre de la recherche, identifier le type du dispositif de communication en recherchant dans la base de données un type de dispositif de communication qui est associé à la fois aux informations d'identification et à d'autres informations d'identification signalées par l'unité de rapport, conjointement avec les informations uniques.

2. Noeud de réseau selon la revendication 1, comprenant en outre une unité de détermination (202) qui détermine un protocole du message de recherche en analysant un contenu du message de recherche ;
dans lequel l'unité de génération génère un message de réponse conforme au protocole déterminé, en tant que le message de réponse devant être envoyé par l'unité d'envoi.
